# EUROPÄISCHE PATENTSCHRIFT

(11) **EP 1 071 192 B1**
(45) Veröffentlichungstag und Bekanntmachung des Hinweises auf die Patenterteilung: **13.09.2006**
(21) Anmeldenummer: 00250247.4
(22) Anmeldetag: 19.07.2000
(51) Int. Cl.: H02K 19/36

(54) **Elektrischer Schenkelpol-Synchronmotor mit schleifringloser Erregung und Anlaufwiderstand**
Electric synchronous motor with slipringless excitation and start resistance
Moteur électrique synchrone avec excitation sans bague et résistance de démarrage

(30) Priorität: 19.07.1999 DE 19934056
(43) Veröffentlichungstag der Anmeldung: 24.01.2001
(73) Patentinhaber: SIEMENS AKTIENGESELLSCHAFT, 80333 München (DE)
(72) Erfinder: Kottenhagen, Winfried, 14193 Berlin (DE)

(56) Entgegenhaltungen:
- DE-A- 3 009 470
- GB-A- 835 973
- US-A- 3 845 369

## Beschreibung

Die Erfindung liegt auf dem Gebiet der elektrischen Maschinen und ist bei konstruktiven Ausgestaltung eines Schenkelpol-Synchronmotors anzuwenden, der einen aus massiven Polen ohne Anlaufkäfig bestehenden Rotor aufweist, wobei diesem Rotor eine schleifringlose Erregermaschine aus einem Stator und einem innerhalb des Stators angeordneten Rotor und einer der Rotorwicklung zugeordneten Gleichrichteranordnung besteht und der Gleichrichteranordnung elektrisch ein Widerstand zur Verringerung des Pendelmomentes und Erhöhung des Drehmomentes in der Anlaufphase des Synchronmotors nachgeordnet ist.

Bei schleifringlos oder auch "bürstenlos" erregten Synchronmotoren, deren Rotor ohne Anlaufkäfig ausgeführt ist, ist es für die Phase des asynchronen Anlaufs üblich, die Feldwicklung über einen äußeren ohmschen Widerstand von ca. dem 10fachen Feldwiderstand kurzzuschließen. Um auch bei erschwerten Anlaufbedingungen eine sicher arbeitende bürstenlose Erregung zu verwirklichen, ist es auch üblich, beim Anlaufvorgang den Gleichrichter entweder kurzzuschließen oder vom Feld zu trennen, wobei das Feld auf einen ohmschen Widerstand (Anlaufwiderstand) geschaltet ist. Durch zusätzliche Maßnahmen kann dieser Widerstand während des synchronen Betriebes abgeschaltet werden (Brown Boveri Mitteilungen, Sept. 1967, Seite 539 bis 553). Ein solcher Anlaufwiderstand kann aus einer größeren Anzahl von Rohrheizkörpern aufgebaut sein, die halbringförmig innerhalb eines Hohlzylinders angeordnet sind, wobei der Hohlzylinder am Ende der freitragend bzw. fliegend gelagerten Welle der Erregermaschine und koaxial zu dieser angeordnet ist und auch die Gleichrichteranordnung aufnimmt. Die Rohrheizkörper sind dabei bezüglich ihrer Anzahl so dimensioniert, daß die anfallende Wärmemenge über die Rohroberfläche sofort an die umgebende Luft abgegeben werden kann. - Die verwendeten Rohrheizkörper werden durch Zentriepetalkräfte auch erheblich mechanisch belastet und können nicht beliebig weit radial nach außen angeordnet werden. Daher nehmen diese Rohrheizkörper sowie Teile der Gleichrichteranordnung bzw. der zugehörigen Steuerung auch den Innenraum des Hohlzylinders ein, der demzufolge axial zugänglich sein muß.

Für Gleichrichteranordnungen der genannten Art ist weiterhin bekannt, die zum Erreger- oder Steuer-Stromkreis gehörenden elektronischen Bauelemente in einem Trägerrad anzuordnen, das aus einem auf die Rotorwelle aufgesetzten Ring, einem darauf aufgeschrumpften Nabenteil und einem damit einstückig ausgebildeten Ringflansch oder aus einem aus Hohlring mit U-förmigem Querschnitt ausgebildeten Gehäuse als Stahl oder Aluminium besteht (DE 25 11 633 B1, DE 25 16 505 B1).

Ausgehend von einem elektrischen Synchronmotor mit den Merkmalen des Oberbegriffs des Patentanspruchs 1 , wie in DE 3 009 470 A oder US-A-3 845 369 offenbart, liegt der Erfindung die Aufgabe zugrunde, den Anlaufwiderstand durch Verbesserung seiner thermischen und mechanischen Belastbarkeit störungsunanfälliger und möglichst wartungsfrei auszugestalten.

Zur Lösung dieser Aufgabe ist gemäß der Erfindung vorgesehen, daß der Widerstand aus einem flachen, isolierten Kupferdraht besteht, der bifilar zu einer mehrlagigen Spule gewickelt ist.

Ein derart aufgebauter und ausgebildeter Anlaufwiderstand hat aufgrund seiner relativ großen Masse eine große Wärmekapazität, so daß keine speziellen Kühlmaßnahmen erforderlich sind. Die beim Hochlauf des Motors anfallende Wärme wird - bedingt durch die Wärmekapazität des Werkstoffes - zunächst von der Spule selbst aufgenommen; die Wärmeabgabe erfolgt dann in der anschließenden Phase des Umlaufens des Motors bei Nenndrehzahl oder auch im Stillstand. Durch Variation der Parameter Leiterquerschnitt und Leiterlänge kann der Anlaufwiderstand leicht an einen vorgegebenen ohmschen Widerstandswert und an die benötigte Wärmekapazität angepaßt werden. Die Ausgestaltung als bifilare Spule stellt dabei eine kompakte, robuste, wartungsfreie und störungsunanfällige Ausführung dar. Bei Ausgestaltung des Anlaufwiderstandes als Spule kann bei entsprechender Stromtragfähigkeit der elektrisch vor- und nachgelagerten Bauteile auch der Induktorstrom angehoben werden, so daß bei höherem Strom zur Erzielung der gleichen Motorleistung weniger Wicklungswindungen in der Hauptmaschine notwendig sind.

Weiterhin kann der als Spule ausgebildete Anlaufwiderstand hohen Zentripetalkräften ausgesetzt werden. Dies ermöglicht, den Durchmesser der Spule problemlos derart zu vergrößern, daß sie auch auf die Rotorwelle aufgeschoben und demzufolge zusammen mit der Gleichrichteranordnung im Bereich zwischen dem B-seitigen Lager und dem Rotor des Schenkelpolmotors (der Hauptmaschine) angeordnet werden kann. Dadurch wird das BS-Ende der Rotorwelle frei und kann für Ankoppelmaßnahmen zur Verfügung stehen. - Die Ausgestaltung des Anlaufwiderstandes als bifilare Spule gewährleistet auch, daß sich nach außen nur ein sehr geringes Magnetfeld entwickelt, d. h. in seinem Umgebungsbereich werden keine unerwünschten Spannungen induziert.

Die guten mechanischen Eigenschaften des neuen Anlaufwiderstandes kommen insbesondere dann zum Tragen, wenn die bifilare Spule innerhalb eines Ringflansches angeordnet ist, der mittels eines Steges und einer Nabe auf der Rotorwelle aufsitzt. Ringflansch, Steg und Nabe können dabei einen Topf bilden. Zweckmäßig ist dabei der Ringflansch auf die Wicklung aufgeschrumpft.

Ein Ausführungsbeispiel des neuen Anlaufwiderstandes ist in den Figuren 1 bis 4 dargestellt. Dabei zeigt
Figur 1 zunächst eine elektrische Gleichrichterschaltung, in die der Anlaufwiderstand integriert ist,
Figur 2 die Zuordnung des Anlaufwiderstandes zur Gleichrichteranordnung und zum Rotor der zugehörigen Erregermaschine, Figur 3 eine Querschnittsdarstellung und
Figur 4 eine Fronansicht des als bifilare Spule ausgebildeteten Anlaufwiderstandes.

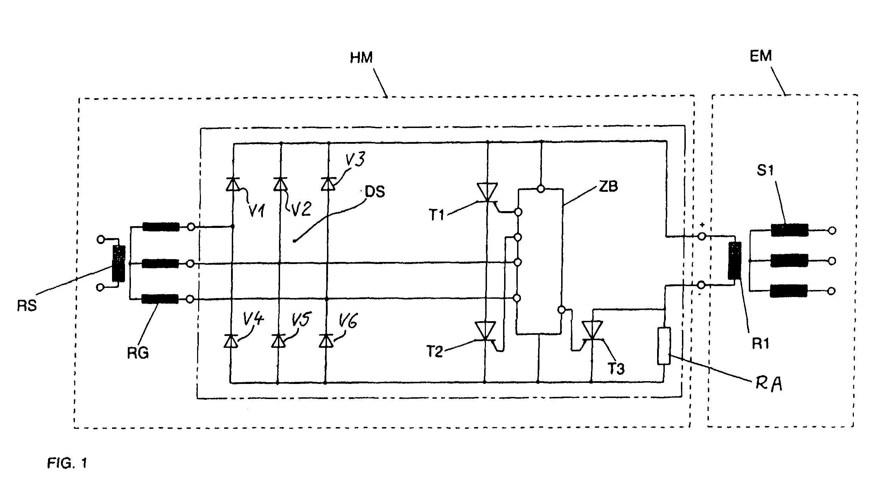

In Anlehnung an Bild 17 der eingangs genannten Literaturstelle "Brown Boveri Mitteilungen" zeigt Figur 1 die elektrische Zuordnung von Stator und Rotor der Hauptmaschine HM und der Erregermaschine EM eines Synchronmotors mit schleifringloser Erregung und der die beiden Rotorwicklungen elektrisch verbindenden Gleichrichteranordnung. Danach ist der Statorwicklung S1 der Hauptmaschine die Rotorwicklung R1 zugeordnet; diese ist über einen Anlaufwiderstand RA, eine Drehstrombrückenschaltung DS und zwei Thyristoren T1 und T2 kurzgeschlossen. In jedem Brückenzweig der Drehstrombrückenschaltung DS ist eine Diode V1 bis V6 angeordnet. An die Brückenschaltung sind weiterhin die Zweige der Rotorwicklung RG der Erregermaschine getrennt herangeführt. Der Rotorwicklung RG ist die Statorwicklung RS zugeordnet. - Parallel zum Anlaufwiderstand RA ist ein Thyristor T3 angeordnet, der von einem Zündbaustein ZB angesteuert wird, um den Anlaufwiderstand RA beim Zuschalten der Erregung kurzzuschließen. Der Zündbaustein ZB reagiert dabei auf die Spannung im Erregerstromkreis und dient auch dazu, die Thyristoren T1 und T2 zu dem erforderlichen Zeitpunkt zu sperren.

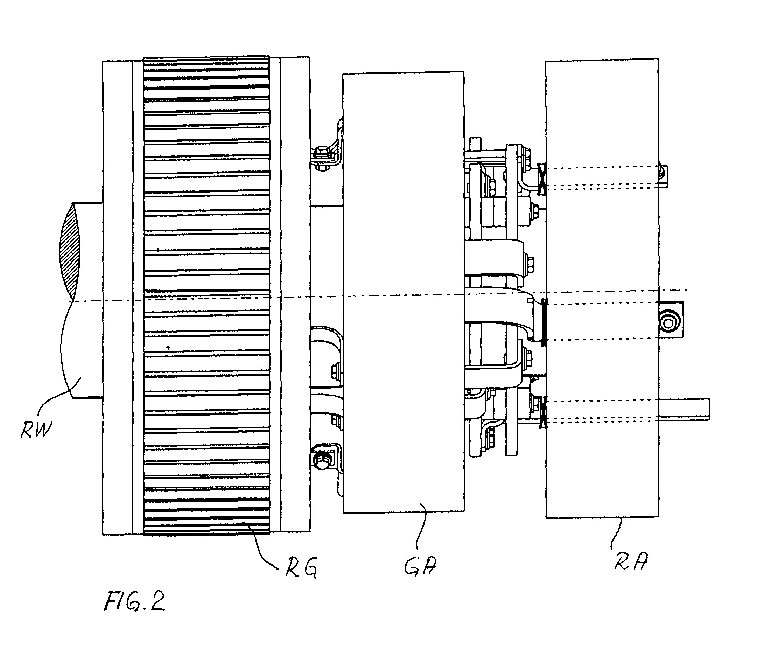

In Anlehnung an Bild 6 und Bild 16 der eingangs genannten Literaturtstelle "Brown Boveri Mitteilungen" zeigt Figur 2 die konstruktive Zuordnung des Anlaufwiderstandes RA zu einer Gleichrichteranordnung GA, in der die Brückenschaltung DS gemäß Figur 1 realisiert ist, und zum Rotor RG der Erregermaschine. Die drei Baugruppen sind auf der Rotorwelle RW axial hintereinander angeordnet und untereinander elektrisch durch entsprechende Verbindungslaschen verbunden. Die radartig ausgebildete Gleichrichteranordnung GA und der ebenfalls radartig ausgebildete Anlaufwiderstand RA sind dabei so dimensioniert, daß ihre Außendurchmesser den Außendurchmesser des Rotors RG nicht überschreiten. Dies bietet bei außen liegender Erregermaschine die Möglichkeit, die auf der Rotorwelle vormontierten Baugruppen Gleichrichteranordnung und Anlaufwiderstand beim Einsetzen des Rotors RG in den Stator der Erregermaschine durch die Statorbohrung hindurchzuschieben.

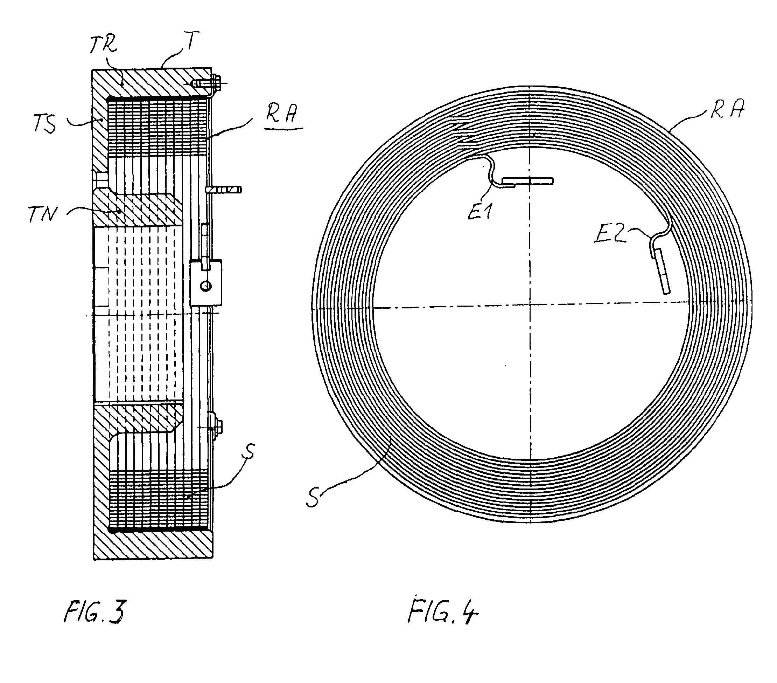

Gemäß Figur 3 ist der Anlaufwiderstand RA in einem Topf T angeordnet, der aus einer Nabe TN, einem Steg TS und einem Ringflansch TR besteht. Der Ringflansch TR ist dabei auf den Anlaufwiderstand RA aufgeschrumpft.

Gemäß den Figuren 3 und 4 besteht der Anlaufwiderstand RA aus einer bifilar mit den beiden Enden E1 und E2 gewickelten, mehrlagigen Spule S aus einem isolierten Kupferleiter mit flachem, rechteckigem Querschnitt. Dieser Querschnitt kann beispielsweise 10 mm x 4 mm betragen. Im dargestellten Ausführungsbeispiel hat die Spule acht Lagen und jede Lage zwölf Windungen.

## Patentansprüche

1. Elektrischer Synchronmotor mit einem Rotor, dem eine schleifringlose Erregermaschine zugeordnet ist, die aus einem Stator und einem innerhalb des Stators angeordneten Rotor (RG) und einer der Rotorwicklung zugeordneten Gleichrichteranordnung (GA) sowie einem der Gleichrichteranordnung elektrisch nachgeordneten Widerstand (RA) zur Verringerung des Pendelmoments und Erhöhung des Drehmoments in der Anlaufphase des zu erregenden Synchronmotors besteht, wobei der Widerstand (RA) koaxial zur Rotorachse angeordnet ist, wobei der Widerstand (RA) aus einem isolierten Draht besteht, der zu einer mehrlagigen Spule (S) gewickelt ist, wobei die Spule (S) innerhalb eines Ringflansches (TR) angeordnet ist, der mittels eines Steges (TS) und einer Nabe (TN) auf der Motorwelle (RW) aufsitzt und wobei Ringflansch (TR), Steg (TS) und Nabe (TN) einen Topf bilden, **dadurch gekennzeichnet, daß**
- der Synchronmotor als Schenkelpol-Synchronmotor ausgebildet ist,
- der Draht ein flacher Kupferdraht ist,
- der Draht bifilar gewickelt ist.

2. Schenkelpol-Synchronmotor nach Patentanspruch 1,
**dadurch gekennzeichnet, dass** der Ringflansch (TR) auf die Wicklung (W) aufgeschrumpft ist.

3. Schenkelpol-Synchronmotor nach einem der Patentansprüche 1 oder 2, **dadurch gekennzeichnet, dass** die Erregermaschine (RS, RG) mit Gleichrichteranordnung (GA) und Anlaufwiderstand (RA) zwischen dem β-seitigen Lager und dem Rotor (R1) der Hauptmaschine angeordnet ist.

## Claims

1. Electric synchronous motor with a rotor, to which is assigned an exciter without a slip ring, said exciter comprising a stator and rotor (RG) arranged within the stator and a rectifier arrangement (GA) assigned to the rotor winding as well as a resistor (RA) arranged electrically downstream of the rectifier arrangement for reducing the oscillating torque and increasing the torque in the start-up phase of the synchronous motor to be excited, with the resistor (RA) being arranged coaxially in relation to the rotor axis, with the resistor (RA) comprising an insulated wire, which is wound into a multilayer coil (S), with the coil (S) being arranged within a annular flange (TR), which is seated on the motor shaft (RW) by means of a stud (TS) and a hub (TN), and with the annular flange (TR), stud (TS) and hub TN) forming a cup,
**characterised in that**
the synchronous motor is designed as a salient-pole synchronous motor,
the wire is a flat copper wire,
the wire is double-wound.

2. Salient-pole synchronous motor according to claim 1, **characterised in that** the annular flange (TR) is shrink-fitted onto the winding (W).

3. Salient-pole synchronous motor according to one of claims 1 or 2, **characterised in that** the exciter (RS, RG) with the rectifier arrangement (GA) and start-up resistor (RA) is arranged between the B-side bearing and the rotor (R1) of the primary machine.

## Revendications

1. Moteur électrique synchrone ayant un rotor, auquel est associée une machine excitatrice sans bague qui est constituée d'un stator et d'un rotor (RG) placé à l'intérieur du stator et d'un dispositif redresseur (GA) associé à l'enroulement de rotor ainsi que d'une résistance (RA) montée électriquement du côté aval du dispositif redresseur et destinée à réduire le couple d'oscillation et à augmenter le couple de rotation dans la phase de démarrage du moteur synchrone à exciter, la résistance (RA) étant disposée coaxialement par rapport à l'axe de rotor, la résistance (RA) étant constituée d'un fil isolé qui est enroulé pour former une bobine (S) à plusieurs couches, la bobine (S) étant placée à l'intérieur d'une collerette annulaire (TR) qui repose au moyen d'une traverse (TS) et d'un moyeu (TN) sur l'arbre de moteur (RW) et la collerette annulaire (TR), la traverse (TS) et le moyeu (TN) formant une cloche,
**caractérisé par le fait que**
- le moteur synchrone est conçu comme un moteur synchrone à pôle saillant,
- le fil est un fil de cuivre plat,
- le fil est enroulé de manière bifilaire.

2. Moteur synchrone à pôle saillant selon la revendication 1, **caractérisé par le fait que** la collerette annulaire (TR) est emmanchée sur l'enroulement (W).

3. Moteur synchrone à pôle saillant selon l'une des revendications 1 ou 2, **caractérisé par le fait que** la machine excitatrice (RS, RG) avec dispositif redresseur (GA) et résistance de démarrage (RA) est placée entre le palier côté B et le rotor (R1) de la machine principale.
